# EUROPÄISCHE PATENTANMELDUNG

(11) **EP 4 166 831 A1**
(43) Veröffentlichungstag der Anmeldung: **19.04.2023**
(21) Anmeldenummer: 21202649.6
(22) Anmeldetag: 14.10.2021
(51) Int. Cl.: F16L 9/18, F16L 9/19

(54) **ROHRLEITUNG ZUM TRANSPORT VON WASSERSTOFF SOWIE ROHRLEITUNGSSYSTEM**

(71) Anmelder: HABAU Hoch-u. Tiefbaugesellschaft m.b.H., 4320 Perg (AT)
(72) Erfinder: Dragan, Harald, 2202 Königsbrunn (AT)
(74) Vertreter: KLIMENT & HENHAPEL

(57) **Zusammenfassung**

Die Erfindung betrifft eine Rohrleitung (1) zum Transport von Wasserstoff, umfassend ein Außenrohr (10) mit einem lichten Außenrohrdurchmesser (12) sowie ein erstes Innenrohr (20) mit einem lichten Innenrohrdurchmesser (22), wobei das Innenrohr (20) einen im Vergleich zum lichten Außenrohrdurchmesser (12) kleineren lichten Innenrohrdurchmesser (22) aufweist sowie innerhalb des Außenrohrs (10) geführt ist, und wobei das Außenrohr (10) so ausgelegt ist, dass es ein fluides Außenrohr-Medium (15) mit einem Außenrohrdruck (P10) enthält, und wobei das Innenrohr (20) so ausgelegt ist, dass es ein fluides Innenrohr-Medium (25) mit einem Innenrohrdruck (P20) enthält, wobei der Außenrohrdruck (P10) größer ist als der Innenrohrdruck (P20).

## Beschreibung

### GEBIET DER ERFINDUNG

Die Erfindung betrifft eine Rohrleitung zum Transport von Wasserstoff, die ein Außenrohr mit einem lichten Außenrohrdurchmesser sowie ein erstes Innenrohr mit einem lichten Innenrohrdurchmesser umfasst, wobei das Innenrohr einen im Vergleich zum lichten Außenrohrdurchmesser kleineren lichten Innenrohrdurchmesser aufweist sowie innerhalb des Außenrohrs geführt ist. Das Außenrohr ist dabei so ausgelegt, dass es ein fluides Außenrohr-Medium mit einem Außenrohrdruck enthält, und das Innenrohr ist so ausgelegt, dass es ein fluides Innenrohr-Medium mit einem Innenrohrdruck enthält.

### STAND DER TECHNIK

Rohrleitungen zum Transport von Wasserstoff werden üblicherweise verwendet, um den gegenwärtig meist dezentral in großen Produktionseinheiten produzierten Wasserstoff an den oftmals weit entfernten Ort eines Verbrauchers zu fördern.

Bei Rohrleitungen für Wasserstoff treten allerdings regelmäßig Materialprobleme aufgrund von Wasserstoffversprödung und Korrosion auf. Unter dem Begriff "Wasserstoffversprödung" versteht man die Änderung der Sprödigkeit, die durch das Eindringen und die Einlagerung von Wasserstoff in ein Metallgitter verursacht wird. Wasserstoff hat ein aktives Elektron und kann daher leicht in eine Kristallstruktur der meisten Metalle migrieren. Da Wasserstoff schon bei niedrigen Temperaturen eine hohe Diffusionsgeschwindigkeit aufweist, ist es möglich, den Wasserstoff bei Temperaturen von bis zu 200°C aus Stahl ohne metallurgische Veränderungen auszutreiben. Wasserstoff kann somit aufgrund der Permeabilität von Stahl durch herkömmliche Stahlrohre diffundieren, weshalb es zu Durchtrittsverlusten von Wasserstoff beim Transport in Stahlrohren kommt. Blanker Stahl ist aufgrund des Fehlens einer entsprechenden Oxidschicht ebenfalls nicht für den Transport von Wasserstoff geeignet, da es zur Versprödung des Stahls kommt und somit Bruchgefahr beim Einsatz von Stahlrohren für den Wasserstofftransport besteht.

Aus Sicherheitsgründen ist der direkte Transport von Wasserstoff in bestehenden Erdgasrohrleitungen bzw. Erdgas-Pipelines, die üblicherweise aus Stahl gefertigt sind, daher nicht möglich. In herkömmlichen Erdgasleitungen können nur geringe Anteile an Wasserstoff vermischt im Erdgas transportiert werden. Der Anteil der Beimischung von Wasserstoff im Erdgas ist allerdings auf wenige Prozent, jedenfalls im einstelligen Prozentbereich, beschränkt.

Es bietet sich an, auf bereits bestehende Erdgasleitungen auch für den Transport von Wasserstoff in höheren Konzentrationen zurückzugreifen. Dazu müssen jedoch die herkömmlichen Stahlrohre von bestehenden Erdgasleitungen ausgebaut und gegen neue Rohre, die für den Transport von Wasserstoff besser geeignet sind, getauscht werden. Der Austausch von Bestandsrohren zur Umrüstung als Wasserstoffrohrleitung ist allerdings sehr kosten-, ressourcen- und zeitintensiv. Des Weiteren ist ein Austausch bzw. Neubau von Erdgasleitungen üblicherweise mit umfangreichen, oft jahrelangen Behördenverfahren samt einer damit einhergehenden Umweltverträglichkeitsprüfung (UVP) verbunden.

Aus dem Stand der Technik ist es bereits bekannt, bestehende Erdgasleitungen für den Transport von Wasserstoff umzurüsten, indem ein Innenrohr in das Bestandsrohr eingezogen wird, wobei in diesem Innenrohr Wasserstoff transportiert werden kann. Bestehende Erdgasleitungen bzw. Erdgas-Pipelines können solcherart relativ rasch zum Wasserstofftransport ertüchtigt werden, da die Innenrohrleitung mit an sich bekannten Inliner-Verfahren in das Außenrohr der Bestandsleitung eingebracht werden kann. Der Transport von Wasserstoff wird deshalb sicherer, da konzentrierter Wasserstoff nicht mehr direkt zur Stahloberfläche an der Innenwandung des Außenrohrs gelangen und es daher zu keiner Stahlversprödung des Außenrohrs kommen kann. Ein teures und sehr aufwendiges Abtrennverfahren mittels Methanisierung oder Membrantrennverfahren, um den dem Erdgas zuvor beigemischten Wasserstoff aus dem bisher in Erdgasleitungen transportiertem Erdgas wieder abzutrennen, wird somit obsolet.

Beispielsweise ist aus der US 2004/0084083 A1 ein solches Rohrsystem bekannt geworden, bei dem in einem inneren Rohr ein nichtodoriertes Gas, beispielsweise Wasserstoff, transportiert werden kann, wobei das innere Rohr durch das äußere Rohr geführt wird. Im äußeren Rohr wird ein odoriertes Gas, beispielsweise Erdgas, geführt. Der Druck im inneren Rohr ist dabei größer als der im äußeren Rohr, um gegebenenfalls Verunreinigungen im nichtodorierten Gas bzw. Wasserstoff zu vermeiden.

Nachteilig an dieser Ausführung ist jedoch, dass Wasserstoff weiterhin aufgrund der Druckdifferenz bzw. des gewählten Druckgefälles in Richtung vom inneren Rohr mit dem darin herrschenden höheren Druck zum äußeren Rohr mit dem darin herrschenden niedrigeren Druck entweichen kann. Es kommt auch bei der in US 2004/0084083 A1 vorgeschlagenen Ausführung weiterhin zu unerwünschten Wasserstoffverlusten in das Erdgas im äußeren Rohr.

### AUFGABE DER ERFINDUNG

Es ist daher Aufgabe der Erfindung, die Nachteile des Stands der Technik zu überwinden und eine verbesserte Rohrleitung, die zum Transport von Wasserstoff geeignet ist, anzugeben, bei der die Transportsicherheit von Wasserstoff weiter erhöht wird und bei der unerwünschte Wasserstoffverluste aufgrund von Diffusion durch die Leitungswandungen möglichst reduziert werden.

### DARSTELLUNG DER ERFINDUNG

Diese Aufgabe wird bei einer eingangs genannten, gattungsgemäßen Rohrleitung zum Transport von Wasserstoff erfindungsgemäß dadurch gelöst, dass der Außenrohrdruck im Außenrohr größer ist als der Innenrohrdruck im Innenrohr.

Die erfindungsgemäße Ausführung einer Rohrleitung zum Transport von Wasserstoff bietet den Vorteil, dass aufgrund der Druckdifferenz zwischen dem größeren Außenrohrdruck und dem im Vergleich dazu kleineren Innenrohrdruck ein Druckgefälle vom Außenrohr in Richtung des innerhalb des Außenrohrs angeordneten Innenrohrs erzeugt wird, welches Druckgefälle einem unerwünschten Austritt des fluiden Innenrohr-Mediums aus dem Innenrohr in das umgebende Außenrohr entgegenwirkt. Insbesondere beim Einsatz von Wasserstoff, vorzugsweise von Wasserstoff in konzentrierter Form oder als reiner Wasserstoff, als Innenrohr-Medium wirkt die aufgeprägte Druckdifferenz bzw. das Druckgefälle mit einem Außenrohrdruck im Außenrohr, der größer ist als der Innenrohrdruck im Innenrohr, unerwünschten Durchtrittsverlusten von Wasserstoff durch die Wandungen des Innenrohrs entgegen. Bei Einsatz eines für Wasserstoff geeigneten Innenrohrmaterials kann mit einer erfindungsgemäßen Rohrleitung somit der Durchtritt von Wasserstoff durch das Innenrohr zumindest reduziert oder möglichst verhindert werden.

Damit einhergehend wird mit einer erfindungsgemäßen Rohrleitung auch die Transportsicherheit erhöht, denn beim Transport von Wasserstoff als Innenrohr-Medium wird auch im Fall von etwaigen Rissen oder Leckagen des Innenrohrs aufgrund des vergleichsweise größeren Außenrohrdruck ein Austritt von Wasserstoff aus dem Innenrohr ins Außenrohr möglichst vermieden.

Generell werden in der Physik Gase und Flüssigkeiten unter dem Begriff "Fluide" zusammengefasst. Die hier gewählten Begriffe "fluides Innenrohr-Medium" sowie "fluides Außenrohr-Medium" umfassen jeweils sowohl gasförmige Medien, als auch flüssige Medien.

Zweckmäßig kann das erste Innenrohr mittels entsprechender Abstandhalter innerhalb des Außenrohrs geführt werden. Bedarfsweise können auch mehrere Innenrohre als Innenrohrbündel innerhalb des Außenrohrs geführt werden. Die Dimension des ersten Innenrohrs und gegebenenfalls die Dimensionen von einem weiteren zweiten oder dritten Innenrohr sind dabei variabel.

Besonders vorteilhaft kann es sein, wenn bei einer erfindungsgemäßen Rohrleitung der Außenrohrdruck um zumindest 1 bar größer ist als der Innenrohrdruck im ersten Innenrohr. In Vorversuchen hat sich gezeigt, dass eine Druckdifferenz von zumindest 1 bar, um die der Außenrohrdruck größer als der Innenrohrdruck ist, ausreichend sein kann, um je nach gewähltem Innenrohrmaterial beim Einsatz von Wasserstoff als Innenrohr-Medium unerwünschte Durchtrittsverluste von Wasserstoff durch die Wandungen des Innenrohrs möglichst zu vermeiden.

In einer weiteren vorteilhaften Ausführung der Erfindung kann bei einer Rohrleitung der Außenrohrdruck von 1 bar bis 10 bar, vorzugsweise von 1 bar bis 5 bar, besonders bevorzugt von 1 bar bis 2 bar, größer sein als der Innenrohrdruck im ersten Innenrohr. Je kleiner die Druckdifferenz zwischen dem Außenrohrdruck und dem Innenrohrdruck ausgewählt wird, umso geringer ist damit einhergehend die mechanische Belastung, die aufgrund des Überdrucks im Außenrohr auf das entsprechende Innenrohrmaterial wirkt. Die hier genannten, bevorzugten Druckdifferenzen von bis zu 10 bar erlauben es, solche Innenrohrmaterialien zu verwenden, die zwar möglichst gut geeignet für den Kontakt mit Wasserstoff geeignet und entsprechend diffusionsdicht sind, die jedoch an sich nicht für Hochdruckanwendungen geeignet sind. So können beispielsweise entsprechend gegen Wasserstoff diffusionsdicht ausgerüstete Kunststoffrohre als Innenrohre innerhalb einer erfindungsgemäßen Rohrleitung eingesetzt werden, da diese im Betrieb bloß einer vergleichsweise kleinen Druckdifferenz zwischen dem höheren Außenrohrdruck und dem niedrigeren Innenrohrdruck widerstehen müssen. Unter Voraussetzung der geeigneten Werkstoffauswahl eines entsprechenden Innenrohrmaterials kann es demnach besonders vorteilhaft sein, wenn bei einer Rohrleitung der Außenrohrdruck von 1 bar bis 2 bar größer ist als der Innenrohrdruck im ersten Innenrohr. In dieser besonders bevorzugten Variante der Erfindung kann das Innenrohr besonders schonend bei vergleichsweise moderatem Überdruck von 1 bar bis 2 bar, der im umgebenden Außenrohr herrscht, innerhalb des Außenrohrs der Rohrleitung geführt werden.

Zweckmäßig kann bei einer erfindungsgemäßen Rohrleitung der absolute Außenrohrdruck größer als 50 bar, vorzugsweise größer als 90 bar, besonders bevorzugt größer als 100 bar, sein. Die hier angegebenen Druckniveaus entsprechen jenen von bestehenden Erdgasleitungen bzw. Erdgaspipelines. So liegt der absolute Leitungsdruck von bestehenden Erdgasleitungen aus Sibirien nach Europa nach Kenntnisstand der Anmelderin etwa bei 98 bar und kann in Hochdruckleitungen bis zu 200 bar betragen. Bei einer erfindungsgemäßen Rohrleitung ist der Innenrohrdruck innerhalb eines Innenrohres dabei jedenfalls kleiner als der entsprechende Außenrohrdruck im Außenrohr.

In einer weiteren zweckmäßigen Ausführung der Rohrleitung kann das Innenrohr parallel mit dem Außenrohr, vorzugsweise konzentrisch mit dem Außenrohr, geführt sein. Zweckmäßig wird das Innenrohr bzw. ein erstes Innenrohr innerhalb des Außenrohres parallel mit dem Außenrohr geführt, um einen direkten Wandkontakt zwischen dem Innenrohr und dem Außenrohr zu vermeiden. Damit wird ein entsprechender Gaspolster des fluiden Außenrohr-Mediums mit gleichmäßigen Druckverhältnissen um den gesamten Umfang des Innenrohres gewährleistet. In einer besonders bevorzugten Ausführungsvariante kann ein einziges Innenrohr auch so mittels entsprechender Abstandhalter innerhalb des Außenrohrs geführt sein, dass das Innenrohr konzentrisch mit dem Außenrohr positioniert ist. In diesem besonders bevorzugten Fall weist ein Ringspalt zwischen dem Außenrohr und dem Innenrohr jeweils dieselbe Spaltbreite auf. Das Innenrohr ist dabei innerhalb des Außenrohres besonders sicher gelagert, da der Abstand zwischen dem Innenrohr und dem umgebenden Außenrohr jeweils möglichst groß ist.

Besonders vorteilhaft ist es, wenn in einer erfindungsgemäßen Rohrleitung das fluide Innenrohr-Medium Wasserstoff enthält oder Wasserstoff ist. Vorteilhaft ist die erfindungsgemäße Rohrleitung nicht auf den Transport von einem Trägermedium wie beispielsweise Erdgas, dem Wasserstoff bloß in geringen Mengen beigemischt ist, beschränkt. Sondern mit der erfindungsgemäßen Rohrleitung ist es aufgrund des gewählten Druckgefälles bei größerem Außenrohrdruck möglich, auch reinen Wasserstoff oder Wasserstoff in höherer Konzentration im Innenrohr bei einem vergleichsweise etwas kleineren Innenrohrdruck als dem Außenrohrdruck sicher und möglichst verlustfrei zu transportieren.

In einer Weiterbildung der Erfindung kann bei einer Rohrleitung, welche zumindest ein weiteres, zweites Innenrohr umfasst, das zumindest eine weitere, zweite Innenrohr mit einem im Vergleich zum lichten Außenrohrdurchmesser kleineren, zweiten lichten Innenrohrdurchmesser innerhalb des Außenrohrs geführt sein, wobei das weitere, zweite Innenrohr so ausgelegt ist, dass es ein weiteres fluides Innenrohr-Medium mit einem zweiten Innenrohrdruck enthält, wobei der Außenrohrdruck größer ist als der zweite Innenrohrdruck.

Der hier gewählte Begriff "zumindest ein weiteres, zweites Innenrohr" umfasst sowohl Ausführungen mit einem zusätzlichen zweiten Innenrohr, das gemeinsam mit dem zuvor beschriebenen ersten Innenrohr innerhalb des Außenrohrs der Rohrleitung geführt wird. Ebenso umfasst dieser gewählte Begriff auch solche Ausführungen, bei denen mehrere Innenrohre, beispielsweise drei, vier oder fünf Innenrohre gemeinsam als Innenrohrbündel innerhalb eines einzigen, gemeinsamen Außenrohres der Rohrleitung geführt werden. Dem Fachmann ist hierzu klar, dass die Dimensionen der zwei oder mehreren Innenrohre variabel sein können. So können die zwei oder mehreren Innenrohre beispielsweise jeweils gleich große lichte Innenrohrdurchmesser aufweisen. Alternativ oder in Ergänzung dazu können einzelne Innenrohre auch individuelle lichte Innenrohrdurchmesser aufweisen, die größer oder kleiner sein können als die Dimension weiterer Innenrohre. Ebenso ist es möglich, die zwei oder mehreren Innenrohre jeweils individuell im GleichstromBetrieb oder im Gegenstrom-Betrieb in Bezug zum Außenrohr-Medium mit Innenrohr-Medium zu beaufschlagen. Ebenso können die Strömungsgeschwindigkeiten innerhalb der zwei oder mehreren Innenrohre zueinander gleich oder individuell unterschiedlich sein und/oder schneller oder langsamer als die herrschende Strömungsgeschwindigkeit des Außenrohr-Mediums innerhalb des Außenrohres ausgewählt werden. Weiters kann in dieser Ausführung mit zwei oder mehreren Innenrohren das Außenrohr-Medium im Außenrohr als stationäres Puffergas rein zum Druckbeaufschlagen des Außenrohres dienen. Die Strömungsgeschwindigkeit eines solchen stationären Puffergases ist somit null.

In einer weiteren bevorzugten Ausführung der Erfindung kann das zumindest eine weitere, zweite Innenrohr parallel zum ersten Innenrohr geführt sein. Wie vorhin bereits dargelegt bietet diese Ausführung, wonach ein zweites Innenrohr und gegebenenfalls weitere Innenrohre mittels entsprechender Abstandhalter parallel zum ersten Innenrohr geführt ist bzw. sind, den Vorteil, dass ein direkter Wandkontakt zwischen den mehreren Innenrohr und dem Außenrohr vermieden werden kann. Die mehreren Innenrohre sind somit innerhalb des Außenrohres aufgrund des im Vergleich zum jeweiligen Innenrohrdruck jeweils größeren Außenrohrdruck jeweils gleichmäßig mit einem Überdruck beaufschlagt. Ein unerwünschter Austritt eines Innenrohr-Mediums nach außen in das Außenrohr wird damit möglichst vermieden.

Besonders zweckmäßig kann sein, wenn bei einer erfindungsgemäßen Rohrleitung das im weiteren, zweiten Innenrohr transportierte fluide Innenrohr-Medium Wasserstoff enthält oder Wasserstoff ist. In dieser Ausführung kann in zwei oder mehreren Innenrohren jeweils Wasserstoff transportiert werden. Beispielsweise können solcherart unterschiedliche Wasserstoff-Qualitäten bzw. Wasserstoff unterschiedlicher Konzentration separat in individuellen Innenrohrleitungen innerhalb ein und derselben erfindungsgemäßen Rohrleitung transportiert werden.

Um einen möglichst sicheren Transport von Wasserstoff zu gewährleisten, kann bei einer Rohrleitung vorteilhaft das erste Innenrohr und gegebenenfalls das zumindest eine weitere, zweite Innenrohr mit einem für den Transport von Wasserstoff geeigneten Rohrleitungsmaterial zumindest innenseitig beschichtet oder aus einem solchen geeigneten Rohrleitungsmaterial hergestellt sein, wobei das geeignete Rohrleitungsmaterial ausgewählt ist aus der Gruppe umfassend: Austenitischer Stahl, Kompositmaterial mit einer Kohlenstofffaser-Struktur, Kompositmaterial mit einer Kohlenstofffaser-Struktur mit Glasfaser-Verstärkung, Kohlenstofffaserverstärkter Polymerkunststoff, Perfluoralkoxy-Polymer-Kunststoff, Polytetrafluorethylen-Kunststoff, Ethylen-Propylen-Copolymer-Kunststoff.

Austenitische Stähle, beispielsweise CrNi-(Chrom-Nickel legierte-) Stähle, bilden unter den Stählen eine Ausnahme. Austenitische Stähle sind weitgehend unempfindlich gegen Wasserstoffversprödung und gehören daher zu den bevorzugten Werkstoffen der Wasserstofftechnik.

Kohlenstofffasern werden überwiegend zur Herstellung von kohlenstofffaserverstärktem Kunststoff (kurz: CFK; C-Faser verstärkter Kunststoff) benutzt. Kompositmaterialien, die Kohlenstofffasermatten oder Kohlenstofffaser-Gelege umfassen und die gegebenenfalls mit Glasfasereinlagen verstärkt sein können, haben sich bereits als für den Kontakt mit Wasserstoff geeignete Materialien erwiesen.

Perfluoralkoxy-Polymere (kurz: PFA) sind vollständig fluorierte Kunststoffe, Copolymere aus Tetrafluorethylen (TFE) und Perfluoralkoxyvinylethern, wie beispielsweise Perfluorvinylpropylether. Diese Polymere sind eine Weiterentwicklung des verbreiteten Sinterwerkstoffes Polytetrafluorethylen (PTFE, bekannt als Markenname Teflon^{®}). PFA sind im Gegensatz zu PTFE thermoplastisch verarbeitbar und weisen bessere Antihafteigenschaften sowie eine höhere Chemikalienbeständigkeit als PTFE auf.

Bei Ethylen-Propylen-Copolymer (kurz: E/P, früher auch EPM, auch EPR von engl. Ethylen-Propylen-Rubber) handelt es sich um ein Copolymer, das aus Ethen und Propen hergestellt wird. Einsatzgebiete sind zum Beispiel Schmelzklebstoffe und Dichtstoffe.

Die vorstehend genannten Werkstoffe sind an sich für den direkten Kontakt mit konzentriertem Wasserstoff geeignet. Vorzugsweise ist es im Rahmen der Erfindung vorgesehen, einen dieser Werkstoffe oder eine Kombination von zwei oder mehreren der genannten Werkstoffe als Material für den Aufbau eines oder mehrerer Innenrohre zu verwenden. Ebenso ist es vom Rahmen der Erfindung umfasst, diejenigen Innenrohre, die zum Wasserstofftransport vorgesehen sind, zumindest innenseitig mit einem der genannten Werkstoffe oder einer Kombination von zwei oder mehreren der genannten Werkstoffe zu beschichten, um den unerwünschten Durchtritt von Wasserstoff durch ein Innenrohr möglichst zu verhindern.

Besonders sicher kann in einer erfindungsgemäßen Rohrleitung Wasserstoff transportiert werden, wenn das Außenrohr-Medium ein Puffergas oder inertes Schutzgas enthält oder ein solches Gas ist. Der hier gewählte Begriff "Puffergas" oder "inertes Schutzgas" umfasst all jene Gase, die sehr reaktionsträge bzw. inert sind und sich praktisch nicht an chemischen Reaktionen beteiligen. Als Puffergas kann beispielsweise herkömmliches Erdgas verwendet werden. Zu den Inertgasen gehören zum Beispiel elementare Gase wie Stickstoff sowie Edelgase wie Helium, Neon, Argon, Krypton, Xenon.

Das Puffergas oder inerte Schutzgas kann beispielsweise im Außenrohr mit kleiner Geschwindigkeit in beide Richtungen bewegt werden. Besonders zweckmäßig kann es sein, wenn das Außenrohr-Medium stationär im Außenrohr befüllt ist und bloß zur Druckbeaufschlagung des Außenrohrs dient.

Um auf bereits bestehende Erdgasleitungen zum Transport von Wasserstoff zurückgreifen zu können, kann es besonders wirtschaftlich sein, wenn bei einer erfindungsgemäßen Rohrleitung das Außenrohr ein Bestandsrohr einer bestehenden Erdgasleitung ist, wobei innerhalb der Erdgasleitung und somit innerhalb des Bestandsrohres das erste Innenrohr und gegebenenfalls zumindest ein weiteres, zweites Innenrohr geführt ist bzw. geführt sind. Zu den weiteren Vorteilen des Einsatzes bzw. des Umrüstens von bestehenden Erdgasleitungen für den Transport von Wasserstoff wird dazu auf die an sich gleichlautenden Vorteile der vorhin bereits genannten Ausführungsvarianten verwiesen.

In einer Weiterbildung der Erfindung kann weiters ein System angegeben werden, wobei das System eine Rohrleitung gemäß der Erfindung umfasst, wobei zumindest ein Innenrohr mit zumindest einem fluiden Innenrohr-Medium, welches Innenrohr-Medium Wasserstoff enthält oder Wasserstoff ist, befüllt ist, und wobei das Außenrohr mit einem fluiden Außenrohr-Medium befüllt ist. Das zumindest eine Innenrohr-Medium wird im zumindest einen Innenrohr dabei mit einer größeren Strömungsgeschwindigkeit gefördert als das Außenrohr-Medium im Außenrohr.

Vorteilhaft ist bei einem solchen System mit einer erfindungsgemäßen Rohrleitung das zumindest eine Innenrohr so ausgelegt, dass das darin befindliche fluide Innenrohr-Medium Wasserstoff enthält oder Wasserstoff ist und mit einer größeren Strömungsgeschwindigkeit gefördert wird als das fluide Außenrohr-Medium im Außenrohr. Da der lichte Innenrohrdurchmesser des zumindest einen Innenrohres zwingend kleiner ist als der lichte Außenrohrdurchmesser, kann gemäß dieser vorteilhaften Ausführung die geringere Fördermenge aufgrund einer vergleichsweise kleinen Innenrohrdimension durch eine entsprechend größere Strömungsgeschwindigkeit des Innenrohr-Mediums innerhalb des zumindest einen Innenrohres ausgeglichen werden.

In einer weiteren vorteilhaften Ausführung kann ein System, welches eine Rohrleitung gemäß der Erfindung umfasst, angegeben werden, wobei das zumindest eine Innenrohr-Medium in gleicher Strömungsrichtung wie die Strömungsrichtung des Außenrohr-Mediums gefördert wird.

In dieser ersten zweckmäßigen Ausführungsvariante eines erfindungsgemäßen Systems wird in einer Rohrleitung das zumindest eine Innenrohr-Medium, welches Wasserstoff enthält oder Wasserstoff ist, in gleicher Strömungsrichtung wie das Außenrohr-Medium gefördert. Der Gleichstrombetrieb, wonach das zumindest eine Innenrohr-Medium sowie das Außenrohr-Medium in gleicher Strömungsrichtung innerhalb der Rohrleitung transportiert werden, bietet den Vorteil, dass beispielsweise beide Medien an einem ersten Ort, dem Ort ihrer Produktion, der Rohrleitung aufgegeben und an einem davon entfernten, zweiten Ort von einem Verbraucher jeweils der Rohrleitung entnommen werden können.

Ebenso kann es vorteilhaft sein, wenn bei einem System mit einer erfindungsgemäßen Rohrleitung das zumindest eine Innenrohr-Medium in entgegengesetzter Strömungsrichtung zur Strömungsrichtung des Außenrohr-Mediums gefördert wird.

In dieser zweiten zweckmäßigen Ausführungsvariante eines erfindungsgemäßen Systems wird in einer erfindungsgemäßen Rohrleitung das zumindest eine Innenrohr-Medium, das Wasserstoff enthält oder Wasserstoff ist, in entgegengesetzter Strömungsrichtung wie das Außenrohr-Medium gefördert. Der Gegenstrombetrieb, wonach das zumindest eine Innenrohr-Medium sowie das Außenrohr-Medium in entgegengesetzter Strömungsrichtung innerhalb der Rohrleitung transportiert werden können, bietet den Vorteil, dass beispielsweise jedes der Medien unabhängig voneinander von einem ersten Ort an einen davon entfernten, zweiten Ort entlang der Transportleitung befördert werden kann. So kann beispielsweise das Innenrohr-Medium am ersten Ort produziert und der Transportleitung aufgegeben und am zweiten Ort von einem entsprechenden Verbraucher der Transportleitung entnommen werden. Umgekehrt kann es beispielsweise zweckmäßig sein, das Außenrohr-Medium am zweiten Ort zu produzieren und der Transportleitung dort aufzugeben, damit das Außenrohr-Medium am ersten Ort von einem Verbraucher weiter genutzt werden kann. Solcherart können in der Rohrleitung besonders flexibel und effizient unterschiedliche Medien in unterschiedlichen Strömungsrichtungen transportiert werden.

Das Außenrohr-Medium kann weiters auch stationär innerhalb des Außenrohres der Rohrleitung eingefüllt sein und als statisches bzw. stationäres Schutzgas wirken. In diesem Fall beträgt die Strömungsgeschwindigkeit null, das Außenrohr-Medium ruht in der Rohrleitung.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken zwar darlegen, diesen aber keinesfalls einengen oder gar abschließend wiedergeben.

Es zeigen:
Fig. 1 in einer isometrischen Ansicht von der Seite einen Längenabschnitt einer ersten erfindungsgemäßen Rohrleitung;
Fig. 2 in einer Frontalansicht eine zweite Ausführung einer erfindungsgemäßen Rohrleitung mit einem Innenrohr;
Fig. 3 in einer Frontalansicht eine dritte Ausführung einer erfindungsgemäßen Rohrleitung mit zwei Innenrohren.

### WEGE ZUR AUSFÜHRUNG DER ERFINDUNG

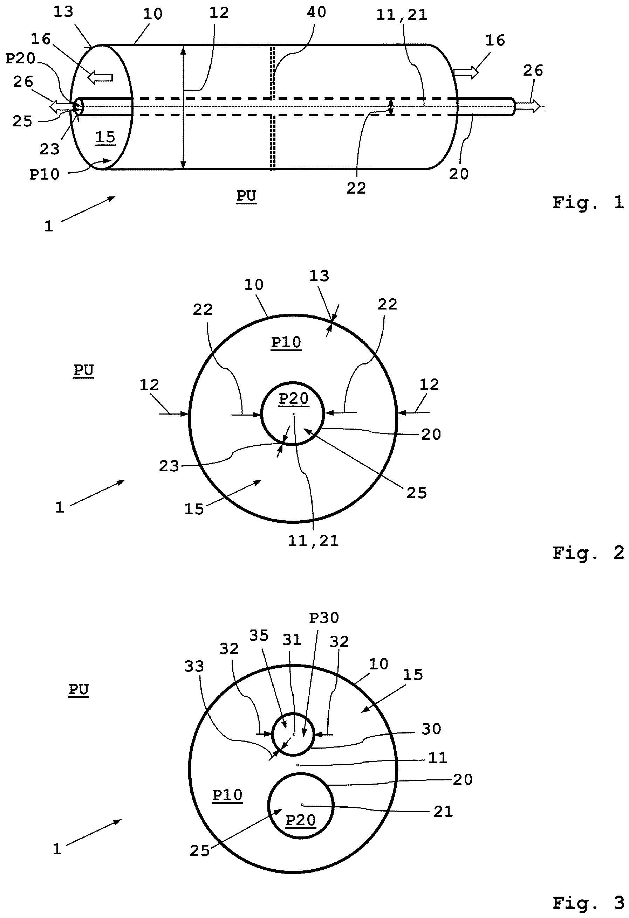

Fig. 1 zeigt schematisch eine Rohrleitung 1 gemäß der Erfindung mit einem zylindrischen Außenrohr 10, wobei das Außenrohr 10 eine Achsenrichtung 11 des Außenrohrs 10 sowie einen lichten Durchmesser 12 aufweist. Das Außenrohr 10 hat eine Wandstärke 13 und ist beispielsweise ein aus Stahl gefertigtes Außenrohr 10 einer bestehenden Erdgasleitung, das aufgrund des Außenrohrmaterials für sich nicht für den direkten Transport von Wasserstoff, zumindest nicht für den Transport von konzentriertem Wasserstoff, geeignet ist.

Innerhalb des Außenrohres 10 befindet sich ein erstes zylindrisches Innenrohr 20 mit einer Achsenrichtung 21 sowie mit einem lichten Durchmesser 22. Der lichte Durchmesser 22 des Innenrohres 20, also der Innenrohrdurchmesser 22, beträgt hier beispielsweise nur etwa 15% (15 Prozent) des Außenrohrdurchmessers 12. Das Innenrohr 20 weist eine Wandstärke 23 auf und ist aus einem für den Kontakt mit Wasserstoff geeigneten Wandmaterial gefertigt.

Die beiden Rohre, also das Außenrohr 10 und das innerhalb des Außenrohres 10 geführte erste Innenrohr 20 sind hier koaxial bzw. konzentrisch angeordnet, wobei entsprechende Abstandhalter 40 zur statischen Positionierung des Innenrohres 20 innerhalb des Außenrohres 10 dienen.

Im Außenrohr 10 befindet sich ein fluides Außenrohr-Medium 15, das hier beispielsweise als Puffergas in Form von Stickstoff vorgelegt ist und mit einer kleinen Strömungsgeschwindigkeit beispielsweise von 0,5 m/s bis 3,5 m/s, symbolisiert durch einen Doppelpfeil 16, in Strömungsrichtung 16 des Außenrohr-Mediums 15 im Außenrohr 10 transportiert wird. Das Außenrohr-Medium 15 in Form von Stickstoff kann hier in beiden Richtungen 16 innerhalb des Außenrohres 10 transportiert werden.

Im ersten Innenrohr 20 befindet sich ein fluides Innenrohr-Medium 25, das hier beispielhaft konzentrierter Wasserstoff ist. Eine Strömungsrichtung 26 des Innenrohr-Mediums 25 im ersten Innenrohr 20 ist durch einen Doppelfeil 26 symbolisiert. Auch das Innenrohr-Medium 15 in Form von Wasserstoff kann hier in beiden Richtungen 26 innerhalb des Innenrohres 20 transportiert werden. Somit ist bei der in Fig. 1 gezeigten Ausführung einer Rohrleitung 1 sowohl ein Gleichstrombetrieb, als auch ein Gegenstrombetrieb zwischen dem Außenrohr-Medium 15 und dem Innenrohr-Medium 25 in Form von Wasserstoff möglich. Ebenso ist es möglich, dass das Außenrohr-Medium 15 in Form von Stickstoff stationär im Außenrohr 10 vorgelegt wird. In diesem Fall beträgt die Strömungsgeschwindigkeit 16 null, das Außenrohr-Medium 15 ruht stationär innerhalb des Außenrohres 10.

Ein Druck P10 des Außenrohr-Mediums 15 im Außenrohr 10, der im Weiteren auch als Außenrohrdruck P10 bezeichnet wird, ist dabei so gewählt, dass der Außenrohrdruck P10 jedenfalls größer ist als ein Innenrohrdruck P20, der als Druck P20 im mit Wasserstoff befüllten ersten Innenrohr 20 herrscht. Beispielsweise ist die Druckdifferenz hier so gewählt, dass der Außenrohrdruck P10 um 2 bar größer ist als der Innenrohrdruck P20.

Außerhalb der Rohrleitung 1 herrscht hier ein Umgebungsdruck PU, der abhängig von der jeweiligen Einbaulage der Rohrleitung 1 ist. Im Falle einer überirdisch frei verlegten Rohrleitung 1 kann der Umgebungsdruck PU beispielsweise ein Normaldruck von 1,01325 bar bzw. von 1013,25 mbar sein. In einem anderen Fall, wonach die Rohrleitung 1 unterirdisch verlegt ist, kann auf eine solche unterirdisch geführte Rohrleitung 1 ein Umgebungsdruck PU wirken, der aufgrund des jeweils herrschenden Erddrucks in Abhängigkeit von der Einbautiefe der Rohrleitung 1 sowie aufgrund einer gegebenenfalls vorhandenen Nutzlast oder Auflast einen gegenüber dem Normaldruck erhöhten Umgebungsdruck aufweist.

Der Absolutdruck, der hier als Außenrohrdruck P10 innerhalb des Außenrohres 10 eingestellt ist, beträgt beispielsweise 100 bar. Der Absolutdruck des hier eingestellten Innenrohrdrucks P20 beträgt demnach beispielsweise 98 bar.

Aufgrund der gewählten Druckdifferenz werden unerwünschte Durchtrittsverluste von Wasserstoff als transportiertem Innenrohr-Medium 25 durch das Innenrohr 20 hindurch in die Rohrkammer des Außenrohres 10 möglichst verhindert. Somit wird mit der hier beispielhaft gezeigten Rohrleitung 1 ein sicherer Transport von konzentriertem Wasserstoff ermöglicht.

Fig. 2 zeigt in einer Frontalansicht eine zweite Ausführung einer erfindungsgemäßen Rohrleitung 1 mit einem Innenrohr 20. Der in Fig. 2 gezeigte Aufbau entspricht im Wesentlichen dem in Fig. 1 veranschaulichten Aufbau. Gleiche Bezugszeichen bezeichnen jeweils gleiche Bauteile und Komponenten, weshalb auf die nochmalige Nennung von bereits zuvor beschriebenen Bezugszeichen verzichtet wird.

Im Unterschied zu Fig. 1 weist hier in Fig. 2 das Innenrohr 20 einen lichten Innenrohrdurchmesser 22 auf, der etwas größer ist und hier etwa 20% (20 Prozent) des lichten Außenrohrdurchmessers 12 des Außenrohres 10 beträgt. Das Innenrohr 20 ist wiederum konzentrisch mit seiner Achsenrichtung 21 in Bezug zur Achsenrichtung 11 des Außenrohres 10 positioniert. Das Wandmaterial des Innenrohres 20 weist eine Wandstärke 23 auf und ist aus einem für den Kontakt mit Wasserstoff geeigneten Wandmaterial gefertigt. Das Außenrohr 10 ist hier ein Stahlrohr.

Der Außenrohrdruck P10 des Außenrohr-Mediums 15 im Außenrohr 10 ist dabei so gewählt, dass der Außenrohrdruck P10 jedenfalls größer ist als der Innenrohrdruck P20, der als Druck P20 im mit Wasserstoff befüllten ersten Innenrohr 20 herrscht. Beispielsweise ist die Druckdifferenz hier so gewählt, dass der Außenrohrdruck P10 um 5 bar größer ist als der Innenrohrdruck P20. Das Außenrohr-Medium 15 ist hier beispielsweise Erdgas.

Außerhalb der Rohrleitung 1 herrscht hier wiederum ein Umgebungsdruck PU, der abhängig vom jeweiligen Standort der Rohrleitung 1 beispielsweise größer als der Normaldruck von 1,01325 bar bzw. von 1013,25 mbar sein kann.

Der Absolutdruck, der hier als Außenrohrdruck P10 innerhalb des Außenrohres 10 eingestellt ist, beträgt beispielsweise 200 bar. Der Absolutdruck des hier eingestellten Innenrohrdrucks P20 beträgt folglich beispielsweise 195 bar.

Fig. 3 stellt in einer Frontalansicht eine dritte Ausführung einer erfindungsgemäßen Rohrleitung 1 mit zwei Innenrohren 20, 30 dar. Beide Innenrohre 20, 30 sind wiederum innerhalb eines gemeinsamen Außenrohres 10 geführt.

Das zweite bzw. weitere Innenrohr 30 hat eine Achsenrichtung 31, die parallel ist mit der Achsenrichtung 11 des Außenrohres sowie parallel mit der Achsenrichtung 21 des ersten Innenrohres 20. Das zweite Innenrohr 30 weist einen lichten Durchmesser 32 auf, der etwas kleiner ist als der lichte Durchmesser 22 des ersten Innenrohres 20. Eine Wandstärke 33 des zweiten Innenrohrs 30 entspricht hier jener Wandstärke 23 des ersten Innenrohres 20. Beide Innenrohrleitungen 20 und 30 sind hier beispielhaft jeweils für den Transport von Wasserstoff geeignet. Im ersten Innenrohr 20 befindet sich beispielsweise Wasserstoff, der mit einem ersten Innenrohrdruck P20 als erstes Innenrohr-Medium 25 befördert wird.

Im zweiten Innenrohr 30 befindet sich beispielsweise ebenfalls Wasserstoff als zweites Innenrohr-Medium 35, wobei das zweite Innenrohr-Medium 35 jedoch eine im Vergleich zum ersten Innenrohr-Medium 25 geringfügig andere Zusammensetzung des Wasserstoffs samt darin enthaltenen Verunreinigungen aufweist. Ein zweiter Innenrohrdruck P30, also der Druck P30 im zweiten Innenrohr 30, entspricht etwa dem ersten Innenrohrdruck P20. Der Außenrohrdruck P10 ist hier beispielsweise jeweils um 3 bar größer gewählt als der erste Innenrohrdruck P20 sowie der zweite Innenrohrdruck P30.

Gegebenenfalls können noch weitere Innenrohre, beispielsweise ein drittes und/oder ein viertes Innenrohr, innerhalb des Außenrohres einer erfindungsgemäßen Rohrleitung geführt werden. Diese weiteren Ausführungsvarianten sind zwar nicht explizit in eigenen Abbildungen veranschaulicht. Dem Fachmann ist anhand der vorliegenden Beschreibung jedoch auch ohne schematische Darstellungen der entsprechende Aufbau solcher erfindungsgemäßen Varianten von Rohrleitungen klar.

### BEZUGSZEICHENLISTE

- 1: Rohrleitung
- 10: Außenrohr
- 11: Achsenrichtung des Außenrohrs
- 12: lichter Durchmesser des Außenrohrs
- 13: Wandstärke des Außenrohrs
- 15: fluides Außenrohr-Medium; Puffergas
- 16: Strömungsrichtung des Mediums im Außenrohr (Pfeil)

- 20: (erstes) Innenrohr
- 21: Achsenrichtung des (ersten) Innenrohrs
- 22: lichter Durchmesser des (ersten) Innenrohrs
- 23: Wandstärke des (ersten) Innenrohrs
- 25: (erstes) fluides Innenrohr-Medium; Wasserstoff
- 26: Strömungsrichtung des Mediums im (ersten) Innenrohr (Pfeil)

- 30: zweites (bzw. weiteres) Innenrohr
- 31: Achsenrichtung des zweiten (bzw. weiteren) Innenrohrs
- 32: lichter Durchmesser des zweiten (bzw. weiteren) Innenrohrs
- 33: Wandstärke des zweiten (bzw. weiteren) Innenrohrs
- 35: zweites (bzw. weiteres) Innenrohr-Medium

- 40: Abstandhalter

- P10: Druck im Außenrohr; Außenrohrdruck
- P20: Druck im (ersten) Innenrohr; (erster) Innenrohrdruck
- P30: Druck im zweiten Innenrohr; zweiter Innenrohrdruck
- PU: Umgebungsdruck

## Patentansprüche

1. Rohrleitung (1) zum Transport von Wasserstoff, umfassend ein Außenrohr (10) mit einem lichten Außenrohrdurchmesser (12) sowie ein erstes Innenrohr (20) mit einem lichten Innenrohrdurchmesser (22), wobei das Innenrohr (20) einen im Vergleich zum lichten Außenrohrdurchmesser (12) kleineren lichten Innenrohrdurchmesser (22) aufweist sowie innerhalb des Außenrohrs (10) geführt ist, und wobei das Außenrohr (10) so ausgelegt ist, dass es ein fluides Außenrohr-Medium (15) mit einem Außenrohrdruck (P10) enthält, und wobei das Innenrohr (20) so ausgelegt ist, dass es ein fluides Innenrohr-Medium (25) mit einem Innenrohrdruck (P20) enthält, **dadurch gekennzeichnet, dass** der Außenrohrdruck (P10) größer ist als der Innenrohrdruck (P20).

2. Rohrleitung (1) nach Anspruch 1, **dadurch gekennzeichnet, dass** der Außenrohrdruck (P10) um zumindest 1 bar größer ist als der Innenrohrdruck (P20).

3. Rohrleitung (1) nach Anspruch 1 oder 2, **dadurch gekennzeichnet, dass** der Außenrohrdruck (P10) von 1 bar bis 10 bar, vorzugsweise von 1 bar bis 5 bar, besonders bevorzugt von 1 bar bis 2 bar, größer ist als der Innenrohrdruck (P20).

4. Rohrleitung (1) nach einem der Ansprüche 1 bis 3, **dadurch gekennzeichnet, dass** der absolute Außenrohrdruck (P10) größer als 50 bar, vorzugsweise größer als 90 bar, besonders bevorzugt größer als 100 bar, ist.

5. Rohrleitung (1) nach einem der Ansprüche 1 bis 4, **dadurch gekennzeichnet, dass** das Innenrohr (20) parallel mit dem Außenrohr (10), vorzugsweise konzentrisch mit dem Außenrohr (20), geführt ist.

6. Rohrleitung (1) nach einem der Ansprüche 1 bis 5, **dadurch gekennzeichnet, dass** das fluide Innenrohr-Medium (25) Wasserstoff enthält oder Wasserstoff ist.

7. Rohrleitung (1) nach einem der Ansprüche 1 bis 6, umfassend zumindest ein weiteres, zweites Innenrohr (30), **dadurch gekennzeichnet, dass** das zumindest eine weitere, zweite Innenrohr (30) mit einem im Vergleich zum lichten Außenrohrdurchmesser (12) kleineren, zweiten lichten Innenrohrdurchmesser (32) innerhalb des Außenrohrs (10) geführt ist, wobei das weitere, zweite Innenrohr (30) so ausgelegt ist, dass es ein weiteres fluides Innenrohr-Medium (35) mit einem zweiten Innenrohrdruck (P30) enthält, wobei der Außenrohrdruck (P10) größer ist als der zweite Innenrohrdruck (P30).

8. Rohrleitung (1) nach Anspruch 7, **dadurch gekennzeichnet, dass** das zumindest eine weitere, zweite Innenrohr (30) parallel zum ersten Innenrohr (20) geführt ist.

9. Rohrleitung (1) nach Anspruch 7 oder 8, **dadurch gekennzeichnet, dass** das im weiteren, zweiten Innenrohr (30) transportierte fluide Innenrohr-Medium (35) Wasserstoff enthält oder Wasserstoff ist.

10. Rohrleitung (1) nach einem der Ansprüche 1 bis 9, **dadurch gekennzeichnet, dass** das erste Innenrohr (20) und gegebenenfalls das zumindest eine weitere, zweite Innenrohr (30) mit einem für den Transport von Wasserstoff geeigneten Rohrleitungsmaterial zumindest innenseitig beschichtet oder aus einem solchen geeigneten Rohrleitungsmaterial hergestellt ist, wobei das geeignete Rohrleitungsmaterial ausgewählt ist aus der Gruppe umfassend: Austenitischer Stahl, Kompositmaterial mit einer Kohlenstofffaser-Struktur, Kompositmaterial mit einer Kohlenstofffaser-Struktur mit Glasfaser-Verstärkung, Kohlenstofffaserverstärkter Polymerkunststoff, Perfluoralkoxy-Polymer-Kunststoff, Polytetrafluorethylen-Kunststoff, Ethylen-Propylen-Copolymer-Kunststoff.

11. Rohrleitung (1) nach einem der Ansprüche 1 bis 10, **dadurch gekennzeichnet, dass** das Außenrohr-Medium (15) ein Puffergas oder inertes Schutzgas enthält oder ist.

12. Rohrleitung (1) nach einem der Ansprüche 1 bis 11, **dadurch gekennzeichnet, dass** das Außenrohr (10) ein Bestandsrohr einer bestehenden Erdgasleitung ist, innerhalb der das erste Innenrohr (20) und gegebenenfalls zumindest ein weiteres, zweites Innenrohr (30) geführt ist bzw. sind.

13. System umfassend eine Rohrleitung (1) nach einem der Ansprüche 1 bis 12, wobei zumindest ein Innenrohr (20, 30) mit zumindest einem fluiden Innenrohr-Medium (25, 35), welches Innenrohr-Medium (25, 35) Wasserstoff enthält oder Wasserstoff ist, befüllt ist, und das Außenrohr (10) mit einem fluiden Außenrohr-Medium (15) befüllt ist, **dadurch gekennzeichnet, dass** das zumindest eine Innenrohr-Medium (25, 35) im zumindest einen Innenrohr (20, 30) mit einer größeren Strömungsgeschwindigkeit gefördert wird als das Außenrohr-Medium (15) im Außenrohr (10).

14. System nach Anspruch 13, **dadurch gekennzeichnet, dass** das zumindest eine Innenrohr-Medium (25) in gleicher Strömungsrichtung (26) wie die Strömungsrichtung (16) des Außenrohr-Mediums (15) gefördert wird.

15. System nach Anspruch 13, **dadurch gekennzeichnet, dass** das zumindest eine Innenrohr-Medium (25) in entgegengesetzter Strömungsrichtung (26) zur Strömungsrichtung (16) des Außenrohr-Mediums (15) gefördert wird.
